# EUROPÄISCHE PATENTSCHRIFT

(11) **EP 4 448 397 B1**
(45) Veröffentlichungstag und Bekanntmachung des Hinweises auf die Patenterteilung: **03.12.2025**
(21) Anmeldenummer: 22840046.1
(22) Anmeldetag: 16.12.2022
(51) Int. Cl.: B65D 1/02, B32B 27/18, B32B 27/32, B32B 27/36

(54) **MEHRWEG-KUNSTSTOFFFLASCHE**
REUSABLE PLASTIC BOTTLE
BOUTEILLE EN PLASTIQUE RÉUTILISABLE

(30) Priorität: 17.12.2021 CH 0707362021
(43) Veröffentlichungstag der Anmeldung: 23.10.2024
(73) Patentinhaber: Alpla-Werke Alwin Lehner GMBH & Co.KG, 6971 Hard (AT)
(72) Erfinder: SIEGL, Robert, 6850 Dornbirn (AT)
(74) Vertreter: Swisspat Riederer Hasler Patentanwälte AG
(86) Internationale Anmeldenummer: PCT/EP2022/086307
(87) Internationale Veröffentlichungsnummer: WO 2023/111246

(56) Entgegenhaltungen:
- DE-U1- 20 214 097
- US-A1- 2008 032 007

## Beschreibung

### Gebiet der Erfindung

Die Erfindung betrifft eine Kunststoffflasche gemäss Oberbegriff des Anspruchs 1 sowie ein Verfahren zur Herstellung einer Kunststoffflasche gemäß dem Obergriff des Anspruchs 15.

### Stand der Technik

Mehrwegflaschen aus Polyester müssen zum Teil vor der Wiederbefüllung von Gerüchen befreit werden. Die Mehrwegflaschen werden bei 30 bis 60°C mit einer Lauge gewaschen und erneut gefüllt. Bei Temperaturen über 60°C neigen die Flaschen dazu, ihre Form zu verändern (Deformation), bzw. zu stark zu schrumpfen. Außerdem greift die eingesetzte Waschlauge den Polyester mit zunehmender Waschlaugentemperatur intensiver an, indem die Ester-Bindung mit der Lauge verseift.

Werden Polyesterflaschen kleinen geruchsintensiven Molekülen (atomare Masseneinheit kleiner 350 Dalton) ausgesetzt, wandern diese Moleküle tief in die Polyestermatrix. Die hierfür verantwortlichen molekularen Bestandteile können ins Füllgut migrieren und können direkt den Geschmack oder den Geruch des Füllgutes oder indirekt über den Geruch den wahrgenommenen Geschmack des Füllgutes negativ beeinflussen.

Das Eindringen ist abhängig von der Kontaktzeit, den Konzentrationen und der Temperatur.

Eine oben beschriebene Wäsche kann die tief eingedrungenen Moleküle nicht vollständig entfernen, wodurch einmal kontaminierte Flaschen nie mehr ganz von den störenden Gerüchen befreit werden können. Wird eine Mehrwegflasche einmal mit einer Limonade gefüllt, dringt Limonen (136 Dalton) in das Polyestermaterial. Wird diese Flasche mit Mineralwasser wieder befüllt, ist der Limonengeruch bzw. Limonengeschmack deutlich wahrnehmbar und stört den Konsumenten. Um störende Gerüche bzw. Geschmäcker zu vermeiden, werden wiederbefüllbare Polyesterflaschen deswegen nur mit derselben Produktkategorie gefüllt, beispielsweise immer wieder mit Limonade oder immer wieder mit Wasser. Alternativ kann eine mit Gerüchen kontaminierte Kunststoffflasche nach Prüfung mit einer sogenannten «elektronischen Nase» aus dem Wiederbefüllungsprozess entfernt werden, indem diese nach der elektronischen Nase ausgeschieden wird. Ausscheidegründe sind ein intensiver Geruch, nach Benzin, Urin, Moder, ranziger Milch usw. Insbesondere nach einer missbräuchlichen Benutzung der Flasche durch den Endverbraucher kommt es zu einem solchen Eindringen von geruchsintensiven Molekülen in die Polyestermatrix.

In der US 2008/0032007 A1 ist ein Kunststoffbehälter zum Aromaschutz von geröstetem Kaffee beschrieben. Der Behälter ist mehrschichtig und weist eine EVOH-Schicht als Barriereschicht auf.

Aus der DE 202 14 097 U1 ist ebenfalls ein Aromaschutzbehälter zur Aufbewahrung von Lebensmitteln, insbesondere von gemahlenem Kaffee offenbart. Dadurch, dass der Behältermantel teilweise als ein Kunststoffbalg ausgebildet ist, lässt sich das Behältervolumen an das Volumen des Füllgutes anpassen und der Luftraum oberhalb des Füllgutes kann zum Aromaschutz reduziert werden.

### Aufgabe der Erfindung

Aus den Nachteilen des beschriebenen Stands der Technik resultiert die Aufgabe Kunststoffflaschen zu schaffen, bei welchen unangenehme Gerüche, welche auf tief in die Polymermatrix eingedrungenen kleinen Molekülen basieren, für den Konsumenten nicht mehr wahrnehmbar sind, bzw. Kunststoffflaschen zu schaffen, welche von der elektronischen Nase, die sich entweder vor der Flaschenwaschanlage bzw. nach der Flaschenwaschanlage befindet, nicht ausgeschieden werden.

Nachfolgend werden Merkmale beschrieben, wobei diese (individuell) als bevorzugte Merkmale zu betrachten sind, auch wenn sie nicht explizit als solche bezeichnet werden. Die Merkmale seien separat als Teil einer beliebigen Kunststoffflasche oder eines beliebigen Verfahrens zur Herstellung einer Kunststoffflasche und - soweit sie sich nicht gegenseitig ausschliessen - in beliebiger Kombination offenbart. Dies schliesst die Möglichkeit ein, Vorrichtungsmerkmale zur Spezifizierung von Verfahrensmerkmalen verwenden zu können, und umgekehrt.

### Beschreibung

Die Lösung der gestellten Aufgabe gelingt bei einer Flasche aus Kunststoff durch die im kennzeichnenden Abschnitt des Patentanspruchs 1 angeführten Merkmale. Weiterbildungen und/oder vorteilhafte Ausführungsvarianten sind Gegenstand der abhängigen Patentansprüche.

Die Erfindung zeichnet sich bevorzugt dadurch aus, dass dem Kunststoff Kaffeeadditive oder Kaffeearomastoffe zugesetzt sind, wodurch das Eindringen der geruchsintensiven Moleküle in den Kunststoff reduziert wird, und störende Gerüche der geruchsintensiven Moleküle reduziert, kaschiert bzw. neutralisiert werden.

Dem Kunststoff werden daher Kaffee oder insbesondere aus Röstkaffee, aus Kaffee oder insbesondere aus Röstkaffee gewonnene Bestandteile, insbesondere Kaffeearomen oder Röstaromen, oder auch andere Bestandteile der Kaffeebohnen selbst hinzugefügt.

Zu diesen Bestandteilen zählen Triglyceride, Diterpenester, Diterpene, Triterpenester, Triterpene und Coffein wie der nachstehenden Tabelle zu entnehmen ist.

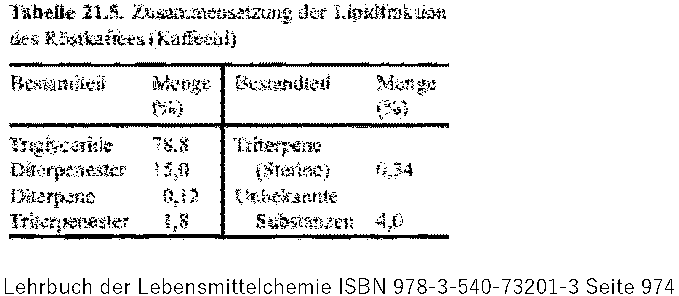

Nachteilig ist, dass der Einsatz von Röstkaffeeadditive wenigstens teilweise zum Abbau der Viskosität des Polyesters führt. Diese Reduktion der intrinsischen Viskosität kann bis zu 0,6 dl/g gemessen nach der ASTM D4603 betragen.

Zu den Röstaromen zählen nach folgender Tabelle:

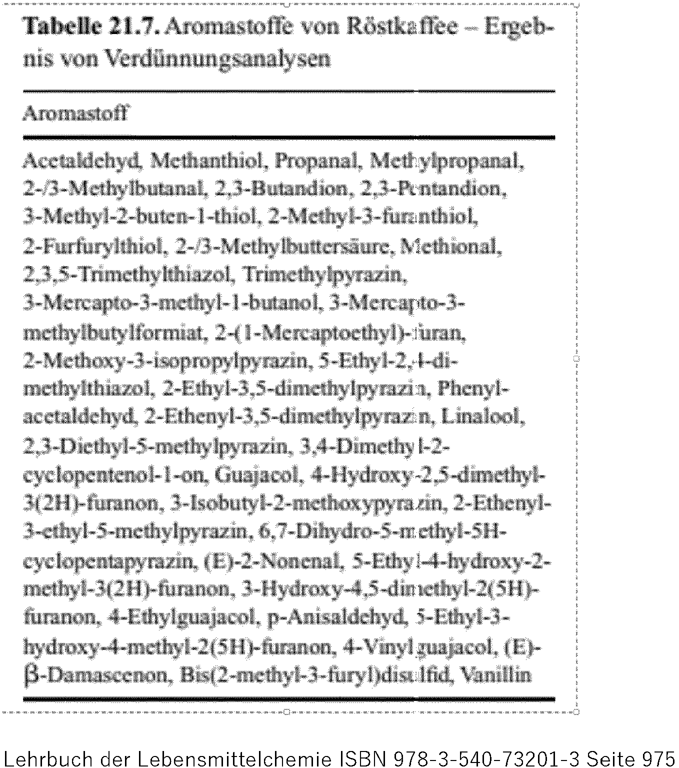

Als Kaffeeadditive sollen auch Abfälle oder nicht nutzbaren Komponenten des Kaffees bzw. der Kaffeebohnen verstanden werden. So entstehen beispielsweise im Röstprozess Fraktionen, sogenannte Schalen und Häutchen, die in erfindungsgemäßer Weise genutzt werden können. Bei Kaffee, der entkoffeiniert wird, entsteht das Koffein als Abfallprodukt und nach der Kaffeezubereitung entsteht Kaffeesatz. All diese Komponenten des Kaffees können durch die Einarbeitung in den Kunststoff in erfindungsgemäßer Weise genutzt werden.

Die Zugabe der Kaffee Komponenten soll dem Polyester so zugeführt werden, dass zumindest für den Konsumenten bewusst kein Kaffee oder Röstaroma wahrnehmbar ist, und die elektronische Nase diese Geruchskomponente als erwünscht eingespeichert hat.

Die mit einem schlechten Geschmack oder unerwünschten Geschmack assoziierten Gerüche (Moleküle kleiner 350Dalton) dringen dadurch überraschender Weise, deutlich weniger in das Material ein, was auch durch die elektronische Nase klar detektierbar ist. Was aber viel wichtiger ist, die menschliche Nase scheint diese Gerüche (Moleküle kleiner 350 Dalton) nicht mehr oder viel weniger wahrzunehmen, wobei es unklar ist, ob eine Neutralisierung oder eine Kaschierung der Gerüche dafür verantwortlich ist.

Röstkaffee zur Neutralisierung von Gerüchen ist genauso wie Essig als Hausmittel bekannt. Die bei wiederbefüllbaren Flaschen verringerte Absorption der geruchsintensiven Moleküle ist jedoch absolut überraschend und in anderen Anwendungen bisher nicht erkannt worden.

Wie im Stand der Technik ausgeführt, können tief in den Kunststoff eingedrungene und unangenehme Gerüche produzierende Moleküle durch Waschprozesse oft nicht mehr entfernt werden. In überraschender Weise können Komponenten von Kaffee solche Gerüche derart beeinflussen, dass diese nicht mehr oder nur mehr peripher wahrnehmbar sind. Dadurch lassen sich Flaschen mit unterschiedlichen Getränken wieder befüllen, ohne dass darauf Rücksicht genommen werden müsste, ob zuvor ein geruchsintensives Füllgut abgefüllt worden ist oder die Flasche den Konsumenten aus anderen Gründen mit Geruchsbelästigungen beinträchtigen könnte.

Selbst wenn eine geruchsrelevante Belastung nicht vermeidbar ist, ist diese geringer bzw. tritt diese erst nach deutlich mehr Zyklen der Flasche auf, und sorgt dafür, dass die Flasche mehr Zyklen durchlaufen kann, bevor die elektronische Nase diese ausscheidet.

Die erfindungsgemäße Beimengung der Kaffeeadditive hat den Vorteil, dass nahezu alle Gerüche nicht mehr so intensiv in die Polymermatrix eindringen können und von dieser so stark wieder abgegeben werden können, als auch den Vorteil, dass die verbleibenden Gerüche nicht mehr vom Konsumenten in dieser Intensität wahrgenommen werden können. Man spricht in diesem Falle oft von einer neutralisierenden Wirkung des Kaffees oder des Kaffeearomas.

Dabei ist es bedeutungslos, ob störende Gerüche übertüncht oder neutralisiert werden. Wesentlich ist, dass der Konsument diese olfaktorisch nicht mehr wahrnehmen kann, oder nicht mehr so stark wahrnehmen kann.

Die Beimengung der Kaffeeadditive ermöglicht es, dass in die Mehrwegflasche nicht immer wieder das gleiche Getränk gefüllt werden muss, sondern die Getränkeart kann gewechselt werden, da jeder unangenehme Geruch eines Getränks, welcher durch Reinigen der Mehrwegflasche nicht 100% entfernbar ist, durch das Röstaroma des Kaffees beeinflusst bzw. neutralisiert wird. Zudem wird das Eindringen der geruchsintensiven Moleküle in die Polymermatrix verringert.

In einer Ausführungsform der Erfindung ist die Kunststoffflasche einschichtig aus einem Kunststoff mit Kaffeeadditive und/oder Kaffeearomastoffe ausgeführt. In einer anderen Ausführungsform ist die Kunststoffflasche mehrschichtig ausgebildet, wobei wenigstens die innere Schicht, d.h. jene Schicht, welche mit Füllgut in Kontakt steht, aus einem Kunststoff besteht, welchem Kaffeeadditive und/oder Kaffeearomen zugesetzt sind. Dies ist wesentlich, damit die Kaffeeadditive und/oder Kaffeearomen den Übergang eines negativen Geschmackes aus dem Füllgut an die innere Schicht verhindern können.

In einer besonders bevorzugten Ausführungsform der Erfindung sind die Kaffeeadditive in dem Kunststoff vorhanden, indem gerösteter Kaffee oder Abfälle aus der Kaffeeproduktion in rieselfähiger Form oder flüssiger Kaffeeextrakt aus geröstetem Kaffee oder aus Abfällen aus der Kaffeeproduktion als Extraktionsgut in den Kunststoff eingebracht sind. Diese beiden Arten des Kaffeeadditivs erzeugen in zuverlässiger Weise eine Versiegelung des Polyesters gegenüber neuen Gerüchen, dass diese weniger stark in das Polymer eindringen und beeinflussen die verbleibende Abgabe an das Füllgut bzw. den Kopfraum über dem Füllgut, sodass der Konsument dies nicht mehr als störend wahrnimmt.

Als zweckdienlich hat es sich erwiesen, wenn als Kaffeeadditiv gemahlene Kaffeebohnen oder Abfälle aus der Kaffeeproduktion mit einer Korngrösse zwischen 50 und 1000 nm und dem Kunststoff mit einer Menge zwischen 0,1 bis 5 Gew% beigemengt ist. Das Additiv lässt sich rasch und kostengünstig herstellen und es reichen geringe Mengen aus, um den gewünschten Effekt der Geruchsreduktion zu erzielen.

Zweckmässigerweise ist der Kaffeeextrakt durch eine Extraktion von erhitztem Öl oder sonstigem Fluid mit fein gemahlenen Kaffeebohnen gewonnen und ist dem Kunststoff als Öl- oder Fluidextrakt mit einer Menge zwischen 0,1 bis 2 Gew% beigemengt. Das erhitzte Öl als Extraktionsmittel kann beispielsweise Rapsöl bei 120 °C sein. Das Ölextrakt verteilt sich besonders leicht und gleichmässig in dem Kunststoff. Denkbar ist es auch, dass das Extraktionsmittel wasserbasiert ist. Jedoch muss der Extrakt wasserfrei gemacht werden, bevor er dem Kunststoff zugesetzt wird, da Wasser den Polyester zerstört (hydrolisiert).

Mit Vorteil sind die in den Kunststoff eingebrachten Kaffeeadditive einen Wasseranteile von höchstens 2000 ppm aufweisen. Wie im letzten Absatz ausgeführt, lässt sich nur eine praktisch wasserfreie Kaffee-Komponente in den Polyester einarbeiten, ohne diesen zu hydrolisieren.

Die Erfindung zeichnet sich auch bevorzugt dadurch aus, dass in den Kunstsoff zu dem in den Kaffeeadditiven enthaltenen Coffein zusätzliches reines Coffein eingebracht ist. Das zusätzliche Coffein bewirkt, dass das Eindringen von geruchsintensiven Molekülen kleiner 350 Dalton, wie Limonen, Acetaldehyd, Formaldehyd, Buttersäure oder Valeriansäure deutlich reduziert ist. Deshalb wird die Geruchsbelastung einer Flasche von vorneherein signifikant reduziert und das Röstaroma von Kaffee muss nur mehr geringere Geruchskonzentrationen überdecken bzw. neutralisieren.

In einer bevorzugten Ausführungsform der Erfindung ist die Flasche durch die zugesetzten Kaffeeadditive gefärbt. Die Verfärbung durch den Kaffee wird als UV und Lichtbarriere genutzt. Diese Verfärbung geht ins bräunliche oder gelbliche. Dadurch erhält eine mit Kaffeeadditiv versetze Flasche automatisch einen sehr guten UV und Lichtschutz, welcher in dem Produkt z.B. Milch, Abbaureaktionen des Vitamin B2 verhindert. Diese Abbaureaktion von Vitamin B2, welche zu sehr unangenehmen Gerüchen führt, kann durch die Einfärbung deutlich reduziert werden.

Als vorteilhaft hat es sich erwiesen, wenn die geruchsintensiven Moleküle Limonen, Acetaldehyd, Formaldehyd, Milchsäure, Valeriansäure oder Buttersäure umfassen. Dies regelmässig im Füllgut vorkommenden Moleküle dringen tief in die Polymermatrix der Kunststofflasche ein. In überraschender Weise hat sich herausgestellt, dass diese Moleküle weniger in die Polymermatrix endringen und das Röstaroma des Kaffees die noch vorhanden sehr unangenehmen Gerüche neutralisieren kann. Dadurch kann die Flasche wieder befüllt werden, ohne dass der Konsument die Gerüche der Moleküle wahrnimmt.

Zweckmässigerweise ist der Kunststoff eine Polyesterverbindung, insbesondere PET, PEF, PEN oder Polyspirolalkoholpolyester. Dadurch lässt sich das Wirkprinzip des Kaffeeadditivs bei allen gängigen Mehrwegflaschen aus Polyester anwenden.

Der Kunststoff kann auch bevorzugt ein Polyolefin, insbesondere PE, PP, oder COC sein, wodurch sich das Wirkprinzip des Kaffeeadditivs auch bei allen gängigen Mehrwegflaschen aus Polyolefinen anwendbar ist.

In einer vorteilhaften Ausführung der Erfindung weist die Polyesterverbindung eine intrinsische Viskosität zwischen 0,84 dl/g und 1,40 dl/g nach ATM D4603 aufweist. Verglichen mit Polyesterverbindungen, welche typischerweise für die Herstellung von Kunststoffeinwegflaschen verwendet werden, weist die vorliegende Polyesterverbindung eine erhöhte intrinsische Viskosität auf. Dadurch kann die negative Wirkung der Röstkaffeeadditive, die zu einem deutlichen Abbau der Polyester-Moleküle führt, kompensiert werden.

In einer weiteren vorteilhaften Ausführung der Erfindung weist die Polyesterverbindung Kettenverlängerer (Chainextender) auf. Auch dadurch kann die negative Wirkung, der Kaffee Komponenten zu einem deutlichen Abbau der Polyester-Moleküle führt, kompensiert werden.

Als Chain-Extender kann in bevorzugter Weise ein polyfunktionelles Anhydrid, d.h. ein Molekül mit zwei oder mehr Anhydrid-Gruppen, verwendet werden.

In einer bevorzugten Ausführungsform der Erfindung kann als Chain-Extender Tetracarbonsäuredianhydride eingesetzt werden.

In einer weitere Ausführungsform kann als Chain Extender Pyromellitsäuredianhydrid eingesetzt werden.

Außerdem können als Chain-Extender einer der nachfolgend genannten Chain Extenender eingesetzt werden: Bisoxazoline, Bisepoxide, Diisocyanate, Polyepoxide, mehrere Glycidyl-Gruppen tragende Verbindungen, Maleinsäureanhydrid, Phthalsäureanhydrid, Triphenylphosphate, Lactamylphosphite, Ciclo-Phosphazen, Polyacyllactam, sowie, Bis-2-Oxazoline, Bis-5,6-dihydro-4h-1,3-Oxazine, Diisocyanate, Trimethyl 1,2,4-benzenetricarboxylat (Trimethyltrimellitate, TMT), Carbonyl bis (1-caprolactam).

Es hat sich gezeigt, dass die Verwendung von Kaffeeadditiven und/oder Kaffearomen sowie allenfalls die Verwendung von höher viskosem Polyester und die Verwendung von Chainextendern bei Mehrweggebinden zweckmässig ist, weil im Mehrwegbereich Flaschen für zahlreiche Füllungen verwendet werden und eine längere Lebensdauer aufweisen als Einweggebinde.

Vorteilhaft ist es, wenn der Kunststoff PET ist, die Wirkung der Kaffee Aromen ist jedoch auch für PP und PE, insbesondere HDPE oder LDPE relevant. Dadurch lässt sich die Geruchsneutralisierung bzw. -Kaschierung nicht nur bei Polyesterflaschen, sondern auch bei Flaschen aus Polypropylen oder Polyethylen anwenden.

Ein weiterer Aspekt der Erfindung betrifft ein Verfahren zur Herstellung einer Mehrweg-Kunststoffflasche gemäss der obenstehenden Beschreibung. Grundsätzlich erfolgt die Herstellung der Flasche nach dem Streckblasen eines spritzgegossenen Preforms. Der Preform wird durch Formen von einem extrudierten Polyester in einer Spritzgussform hergestellt. Beim Befüllen des Extruders werden dem Polyester Kaffeeadditive und/oder Kaffeearomastoffe beigemengt. Dadurch lässt sich die Beimengung der Kaffeeadditive bei jeder Extrusion zur Herstellung eines Preforms mit geringem Aufwand ergänzen.

## Patentansprüche

1. Mehrweg-Kunststoffflasche zur Aufnahme von Füllgut, bestehend aus einem Kunststoff, der geruchsintensive Moleküle aus dem Füllgut oder aus Rückständen des Füllgutes aufnimmt,
**dadurch gekennzeichnet,**
**dass** dem Kunststoff Kaffeeadditive und/oder Kaffeearomastoffe zugesetzt sind, wodurch das Eindringen der geruchsintensiven Moleküle in den Kunststoff reduziert ist und störende Gerüche der geruchsintensiven Moleküle reduziert, kaschiert bzw. neutralisiert sind.

2. Kunststoffflasche nach Anspruch 1, **dadurch gekennzeichnet, dass** die Kunststoffflasche einschichtig aus dem Kunststoff mit Kaffeeadditive und/oder Kaffeearomastoffe ausgebildet ist.

3. Kunststoffflasche nach einem der Ansprüche 1 oder 2, **dadurch gekennzeichnet, dass** die Kunststoffflasche mehrschichtig ausgebildet ist, wobei wenigstens jene Schicht, welche mit Füllgut in Kontakt steht, aus einem Kunststoff besteht, welchem Kaffeeadditive und/oder Kaffeearomen zugesetzt sind.

4. Kunststoffflasche nach einem der Ansprüche 1 bis 3, **dadurch gekennzeichnet, dass** die Kaffeeadditive in dem Kunststoff vorhanden sind, indem gerösteter Kaffee oder Abfälle aus der Kaffeeproduktion in rieselfähiger Form oder flüssiger Kaffeeextrakt aus geröstetem Kaffee oder aus Abfällen aus der Kaffeeproduktion als Extraktionsgut in den Kunststoff eingebracht ist.

5. Kunststoffflasche nach einem der Ansprüche 1 bis 3, **dadurch gekennzeichnet, dass** als Kaffeeadditiv gemahlene Kaffeebohnen oder Abfälle aus der Kaffeeproduktion mit einer Korngrösse zwischen 50 und 1000 nm ist und dem Kunststoff mit einer Menge zwischen 0,1 bis 5 Gew% beigemengt ist.

6. Kunststoffflasche nach einem der Ansprüche 1 bis 4, **dadurch gekennzeichnet, dass** der Kaffeeextrakt durch eine Extraktion von erhitztem Öl oder sonstigem Fluid mit fein gemahlenen Kaffeebohnen gewonnen ist und dem Kunststoff als Öl- oder Fluidextrakt mit einer Menge zwischen 0,1 bis 2 Gew% beigemengt ist.

7. Kunststoffflasche nach einem der vorangehenden Ansprüche, **dadurch gekennzeichnet, dass** die in den Kunststoff eingebrachten Kaffeeadditive einen Wasseranteil von höchstens 2000 ppm aufweisen.

8. Kunststoffflasche nach einem der einem der vorangehenden Ansprüche, **dadurch gekennzeichnet, dass** in den Kunststoff zu dem in den Kaffeeadditiven enthaltenen Coffein zusätzliches reines Coffein eingebracht ist.

9. Kunststoffflasche nach einem der vorangehenden Ansprüche, **dadurch gekennzeichnet, dass** der Kunststoff eine Polyesterverbindung, insbesondere PET, PEF, PEN oder ein Polyspiroalkoholpolyester, ist.

10. Kunststoffflasche nach einem der Ansprüche 1 bis 8, **dadurch gekennzeichnet, dass** der Kunststoff ein Polyolefin, insbesondere PE, PP, oder COC.

11. Kunststoffflasche nach Anspruch 9, durch gekennzeichnet, dass die Polyesterverbindung eine intrinsische Viskosität zwischen 0,84 und 1,4 dl/g nach ATM D4603 aufweist.

12. Kunststoffflasche nach Anspruch 9 oder 11, **dadurch gekennzeichnet, dass** die Polyesterverbindung Kettenverlängerer (Chainextender) aufweist.

13. Kunststoffflasche nach Anspruch 12, **dadurch gekennzeichnet, dass** als Chain-Extender ein polyfunktionelles Anhydrid, d.h. ein Molekül mit zwei oder mehr Anhydrid-Gruppen, verwendet wird.

14. Kunststoffflasche nach Anspruch 12, **dadurch gekennzeichnet, dass** als Chain-Extender Bisoxazoline, Bisepoxide, Diisocyanate, Polyepoxide, mehrere Glycidyl-Gruppen tragende Verbindungen, Maleinsäureanhydrid, Phthalsäureanhydrid, Triphenylphosphate, Lactamylphosphite, Ciclo-Phosphazen, Polyacyllactam, sowie, Bis-2-Oxazoline, Bis-5,6-dihydro-4h-1,3-Oxazine, Diisocyanate, Trimethyl 1,2,4-benzenetricarboxylat (Trimethyltrimellitate, TMT), Carbonyl bis (1-caprolactam) eingesetzt wird.

15. Verfahren zur Herstellung einer Mehrweg-Kunststoffflasche nach einem der Ansprüche 1-14 aufweisend folgende Schritte
a) Befüllen eines Extruders mit einem Polyester,
b) Extrudieren des Polyester und Zuführen des Polyesters in ein Formwerkzeug einer Spritzgießmaschine,
c) Formen eines Preforms,
d) Erwärmen des Preforms auf eine Temperatur von 30 bis 50° Celsius über der Glasübergangstemeperatur des verwendeten Polyesters,
e) Zuführen des erwärmten Preforms in ein Blasformwerkzeug einer Blasmaschine,
f) Blasen und Verstrecken einer Kunststoffflasche und
g) Auswerfen der Kunststoffflasche aus dem Blasformwerkezeug;
**dadurch gekennzeichnet, dass**
beim Befüllen des Extruders dem Polyester Kaffeeadditive und/oder Kaffeearomastoffe beigemengt werden.

## Claims

1. A reusable plastic bottle for receiving a product, which bottle consists of a plastic material that absorbs odorous molecules from the product or from residues of the product,
**characterized in that**
coffee additives and/or coffee flavors are added to the plastic material, thereby reducing the penetration of odorous molecules into the plastic and reducing, masking or neutralizing off-odors of the odorous molecules.

2. The plastic bottle according to claim 1, **characterized in that** the plastic bottle is designed in one layer from the plastic material with coffee additives and/or coffee flavors.

3. The plastic bottle according to claim 1 or claim 2, **characterized in that** the plastic bottle is multi-layered, at least the layer that is in contact with the product consisting of a plastic material to which coffee additives and/or coffee flavors are added.

4. The plastic bottle according to any of claims 1 to 3, **characterized in that** the coffee additives are present in the plastic material by introducing roasted coffee or waste from coffee production in a free-flowing form or liquid coffee extract from roasted coffee or from waste from coffee production as extraction material into the plastic material.

5. The plastic bottle according to any of claims 1 to 3, **characterized in that** the coffee additive is ground coffee beans or waste from coffee production having a particle size between 50 and 1000 nm and is added to the plastic material in an amount between 0.1 and 5 wt.%.

6. The plastic bottle according to any of claims 1 to 4, **characterized in that** the coffee extract is obtained by extracting heated oil or other fluid with finely ground coffee beans and is added to the plastic material as an oil or fluid extract in an amount between 0.1 and 2 wt.%.

7. The plastic bottle according to any of the preceding claims, **characterized in that** the coffee additives introduced into the plastic material have a water content of at most 2000 ppm.

8. The plastic bottle according to any of the preceding claims, **characterized in that** additional pure caffeine is introduced into the plastic material in addition to the caffeine contained in the coffee additives.

9. The plastic bottle according to any of the preceding claims, **characterized in that** the plastic material is a polyester compound, in particular PET, PEF, PEN, or a polyspiro alcohol polyester.

10. The plastic bottle according to any of claims 1 to 8, **characterized in that** the plastic material is a polyolefin, in particular PE, PP, or COC.

11. The plastic bottle according to claim 9, **characterized in that** the polyester compound has an intrinsic viscosity of between 0.84 and 1.4 dl/g according to ATM D4603.

12. The plastic bottle according to claim 9 or claim 11, **characterized in that** the polyester compound has chain extenders.

13. The plastic bottle according to claim 12, **characterized in that** a polyfunctional anhydride, i.e., a molecule having two or more anhydride groups, is used as a chain extender.

14. The plastic bottle according to claim 12, **characterized in that** bisoxazolines, bisepoxides, diisocyanates, polyepoxides, a plurality of compounds bearing glycidyl groups, maleic anhydride, phthalic anhydride, triphenyl phosphates, lactamyl phosphites, ciclo-phosphazene, polyacyl lactam, along with bis-2-oxazolines, bis-5,6-dihydro-4h-1,3-oxazines, diisocyanates, trimethyl 1,2,4-benzenetricarboxylate (trimethyltrimellitate, TMT), carbonyl bis (1-caprolactam) are used as chain extenders.

15. A method for producing a reusable plastic bottle according to any of claims 1-14, comprising the following steps:
a) filling an extruder with a polyester,
b) extruding the polyester and feeding the polyester into a molding tool of an injection molding machine,
c) forming a preform,
d) heating the preform to a temperature of 30 to 50° Celsius above the glass transition temperature of the polyester used,
e) feeding the heated preform into a blow molding tool of a blow molding machine,
f) blowing and stretching a plastic bottle, and
g) ejecting the plastic bottle from the blow molding tool,
**characterized in that**
coffee additives and/or coffee flavors are added to the polyester when the extruder is filled.

## Revendications

1. Bouteille en matière plastique réutilisable, destinée à recevoir un produit de remplissage, constituée d'une matière plastique, qui absorbe des molécules fortement odorantes hors du produit de remplissage ou hors de résidus du produit de remplissage,
**caractérisée**
**en ce qu'**à la matière plastique sont ajoutés des additifs du café et / ou des agents aromatiques du café, suite à quoi la pénétration des molécules fortement odorantes dans la matière plastique est réduite et des odeurs gênantes des molécules fortement odorantes sont réduites, masquées ou neutralisées.

2. Bouteille en matière plastique selon la revendication 1, **caractérisée en ce que** la bouteille en matière plastique est conçue en monocouche à partir de la matière plastique dotée d'additifs du café et / ou d'agents aromatiques du café.

3. Bouteille en matière plastique selon l'une quelconque des revendications 1 ou 2, **caractérisée en ce que** la bouteille en matière plastique est conçue en multicouches, au moins la couche laquelle est en contact avec le produit de remplissage étant constituée d'une matière plastique à laquelle sont ajoutés des additifs du café et / ou des arômes du café.

4. Bouteille en matière plastique selon l'une quelconque des revendications 1 à 3, **caractérisée en ce que** les additifs du café sont présents dans la matière plastique **en ce que** du café torréfié ou des déchets de la production de café sont introduits sous forme coulante ou de l'extrait de café liquide issu de café torréfié ou de déchets de la production de café est introduit sous la forme de produit d'extraction dans la matière plastique.

5. Bouteille en matière plastique selon l'une quelconque des revendications 1 à 3, **caractérisée en ce que** l'additif du café consiste dans des grains de café moulus ou des déchets de la production du café d'une taille granulaire comprise entre 50 et 1000 nm et est ajouté à la matière plastique dans une quantité comprise entre 0,1 à 5 % en poids.

6. Bouteille en matière plastique selon l'une quelconque des revendications 1 à 4, **caractérisée en ce que** l'extrait de café est récupéré par une extraction d'huile liquide ou un autre fluide avec des grains de café finement moulus et est ajouté à la matière plastique en tant qu'extrait huileux ou fluide, dans une quantité comprise entre 0,1 à 2 % en poids.

7. Bouteille en matière plastique selon l'une quelconque des revendications précédentes, **caractérisée en ce que** les additifs du café introduits dans la matière plastique présentent une part d'eau d'au plus 2000 ppm.

8. Bouteille en matière plastique selon l'une quelconque des revendications précédentes, **caractérisée en ce que** dans la matière plastique est introduite de la caféine pure, additionnellement à la caféine contenue dans les additifs du café.

9. Bouteille en matière plastique selon l'une quelconque des revendications précédentes, **caractérisée en ce que** la matière plastique est un composé du polyester, notamment un PET, un PEF, un PEN ou un polyester de spiro-polyalcool.

10. Bouteille en matière plastique selon l'une quelconque des revendications 1 à 8, **caractérisée en ce que** la matière plastique est une polyoléfine, notamment un PE, un PP ou un COC.

11. Bouteille en matière plastique selon la revendication 9, **caractérisée en ce que** le composé polyester fait preuve d'une viscosité intrinsèque comprise entre 0,84 et 1,4 dl/g selon la norme ATM D4603.

12. Bouteille en matière plastique selon la revendication 9 ou 11, **caractérisée en ce que** le composé polyester comporte des agents allongeurs de chaîne (Chainextender).

13. Bouteille en matière plastique selon la revendication 12, **caractérisée en ce que** l'on utilise en tant qu'agent allongeurs de chaîne un anhydride polyfonctionnel, c'est-à-dire une molécule avec deux ou plusieurs groupes anhydride.

14. Bouteille en matière plastique selon la revendication 12, **caractérisée en ce que** l'on met en œuvre en tant qu'agent allongeur de chaîne des bisoxazolines, des bisépoxydes, des diisocyanates, des polyépoxydes, des composés portant plusieurs groupes glycidyles, un anhydride maléique, un anhydride phtalique, des phosphates de triphényle, des phosphites de lactamyle, un cyclophosphazène, un polyacyllactame, ainsi qu'une bis-2-oxazoline, une bis-5,6-dihydro-4h-1,3-oxazine, des diisocyanates, un triméthyle 1,2,4-tricarboxylate de benzène (trimellitates de triméthyle, TMT), un carbonyle bis (1-caprolactame).

15. Procédé, destiné à fabriquer une bouteille en matière plastique réutilisable selon l'une quelconque des revendications 1 à 14, comportant les étapes suivantes, consistant à
a) remplir une extrudeuse avec un polyester,
b) extruder le polyester et amener le polyester dans un outil de moulage d'une machine de moulage par injection,
c) mouler une préforme,
d) faire chauffer la préforme à une température de 30 à 50° Celsius au-delà de la température de transition vitreuse du polyester utilisé,
e) amener la préforme chauffée dans un moule de soufflage d'une machine de soufflage,
f) souffler et étirer une bouteille en matière plastique et
g) éjecter la bouteille en matière plastique hors du moule de soufflage,
**caractérisé en ce que**
lors du remplissage de l'extrudeuse, l'on ajoute au polyester des additifs du café et / ou des agents aromatiques du café.
